# EUROPÄISCHE PATENTANMELDUNG

(11) **EP 2 386 515 A1**
(43) Veröffentlichungstag der Anmeldung: **16.11.2011**
(21) Anmeldenummer: 11003930.2
(22) Anmeldetag: 12.05.2011
(51) Int. Cl.: B66C 1/10, B66C 23/20, F03D 1/00, F03D 11/04

(54) **Transformator-Tausch**

(30) Priorität: 14.05.2010 DE 102010020587
(71) Anmelder: Powerwind GmbH, 20457 Hamburg (DE)
(72) Erfinder: Hahn, Holger, 22089 Hamburg (DE)
(74) Vertreter: Leinweber & Zimmermann

(57) **Zusammenfassung**

Die Erfindung betrifft ein Verfahren zum Verfahren zum Durchführen einer Last wie etwa einer elektrischen Einrichtung, insbesondere einer Transformatoreinheit, durch eine in einer Turmwand eines Turms einer Windenergieanlage gebildete Öffnung mithilfe eines an einer Hebevorrichtung aufgehängten Trägers, der Tragemittel zum Ankoppeln der Last und Verschiebemittel zum Verschieben einer an den Tragemitteln angekoppelten Last aufweist. Ein Verbindungsbereich des vorderen Trägerabschnittes ist dabei mit einer Stützvorrichtung im Turminneren verbunden. Ferner betrifft die Erfindung einen Turm und einen Träger zur Ausführung des erfindungsgemäßen Verfahrens.

## Beschreibung

Die Erfindung betrifft ein Verfahren zum Durchführen einer Last wie etwa einer elektrischen Einrichtung, insbesondere einer Transformatoreinheit, durch eine in einer Turmwand eines Turms einer Windenergieanfage gebildete Öffnung. Ferner betrifft die Erfindung einen Turm einer Windenergieanlage und einen Träger zur Ausführung des erfindungsgemäßen Verfahrens.

Aus dem Stand der Technik sind Windenergieanlagen mit elektrischen Anlagen wie etwa einer Mittelspannungsanlage bekannt, in denen die in einem Generator erzeugte Spannung auf die Spannung eines Mittelspannungsnetzes transformiert wird. Die elektrischen Anlagen weisen üblicherweise elektrische Einrichtungen wie Mittel- und/oder Niederspannungsschaltungen und als räumlich größtes Bauteil eine Transformatoreinheit auf und können in der Gondel, im Turminneren oder extern angeordnet sein. Im Turminneren angeordnete elektrische Einrichtungen befinden sich regelmäßig im Bereich des Turmfußes, ggf. direkt auf dem Turmfundament oder auf einer oberhalb des Turmfundamentes in das Turminnere eingezogenen Geschoßebene.

Routinemäßige Wartungsarbeiten oder die Reparaturen kleinerer Defekte an im Turminneren aufgestellten elektrischen Einrichtungen können von dem Techniker vor Ort durchgeführt werden. Für größere Reparatur- und Wartungsarbeiten können jedoch das Entfernen einer elektrischen Einrichtung aus dem Turm, sowie der Wiedereinbau der reparierten Einrichtung in den Turm notwendig werden. Bisweilen müssen defekte elektrische Einrichtungen ausgetauscht und durch neue Einrichtungen ersetzt werden. Insbesondere Transformatoreinheiten sind jedoch üblicherweise sehr voluminös und schwer, so dass deren Entfernen aus dem Turm schwierig ist, da eine in der Turmwand üblicherweise vorhandene Türöffnung regelmäßig zu klein für die Durchführung einer Transformatoreinheit ist und im Turminneren nur wenig Platz für den Angriff eines Transport- oder Hebemittels zum Anheben und Verschieben der Transformatoreinheit in Richtung der Türöffnung vorhanden ist. Auch das Ankoppeln der Transformatoreinheit an einen Kran zum Weitertransport der Transformatoreinheit unmittelbar nach Durchführung der Transformatoreinheit durch die Türöffnung bereitet logistische Schwierigkeiten.

Der erstmalige Einbau einer Transformatoreinheit in einen Turm einer Windenergieanlage vor Inbetriebnahme einer Windenergieanlage bereitet gleichermaßen Schwierigkeiten.

In der Schrift DE 101 45 414 A1 wird vorgeschlagen, bereits nach Errichtung des Fundaments der Windenergieanlage die wesentlichen Leistungsmodule, also insbesondere die Transformatoreinheit, auf dem Fundament zu platzieren und danach den Turm zu errichten, so dass die gesamten Leistungsmodute nach Errichtung des Turms im Bereich des Turmfundamentes bzw. im unteren Teil des Turms geschützt sind und sicher auf dem Turmfundament ruhen. Ein nachträgliches Entfernen der Leistungsmodule, insbesondere der Transformatoreinheit, bei Defekt oder Ausfall aus dem Turminneren ist in diesem Fall besonders schwierig.

Bei einigen bekannten Windenergieanlagen ist die Türöffnung so dimensioniert, dass die Transformatoreinheit durch die Türöffnung in den Turm hineingeführt und aus dem Turm wieder entfernt werden kann. Die Größe der Türöffnung wird dabei durch die Abmessungen der Transformatoreinheit bestimmt. Die Transformatoreinheit wird aus diesem Grund so kompakt wie möglich gebaut.

Aus der Schrift DE 10 2008 035 350 ist es weiter bekannt, in der Turmwand einer Windenergieanlage eine besonders dimensionierte Öffnung vorzusehen, die größer als die Türöffnung ist und der Durchführung der Transformatoreinheit dient. Diese zusätzliche Öffnung kann mithilfe eines Wandabschnittes lösbar verschlossen werden.

Der Transport der Transformatoreinheit durch eine solche Öffnung bereitet jedoch aufgrund des Volumens und des großen Gewichtes der Transformatoreinheit und aufgrund der beengenden Platzverhältnisse im Bereich des Turmfußes Probleme. So ist beispielsweise in der DE 10 2008 035 350 beschrieben, dass die Transformatoreinheit auf Schienen auf Höhe der Unterseite der Öffnung aus dem Turm herausbewegt werden kann. Ferner ist die Möglichkeit genannt, innerhalb des Turmes ein fest installiertes Hebezeug vorzusehen, das entlang einer horizontal verlaufenden Schiene geführt ist. Mithilfe des Hebezeuges kann die Transformatoreinheit innerhalb der Geschoßebene des Turmes bewegt werden. Allerdings ist eine Durchführung der Transformatoreinheit durch die Türöffnung mithilfe des Hebezeugs nicht möglich.

Angesichts der beschriebenen Probleme im Stand der Technik liegt der Erfindung die Aufgabe zugrunde, ein Verfahren zur Durchführung einer Last wie etwa einer elektrischen Einrichtung durch eine Öffnung in der Turmwand bereitzustellen, das schnell und einfach durchführbar ist.

Erfindungsgemäß wird die Aufgabe durch ein Verfahren gelöst, das die folgenden Schritte aufweist:
- Einführen eines vorderen Abschnittes eines Trägers mit etwa horizontal verlaufender Längsachse durch die Öffnung in das Turminnere, wobei der Träger an einer Hebevorrichtung wie etwa einem Kran aufgehängt ist,
- Verbinden eines Verbindungsbereichs des vorderen Trägerabschnittes mit einer im Turminneren vorgesehenen Stützvorrichtung,
- Ankoppeln der Last an an dem Träger angeordnete Tragemittel, wobei der Träger Verschiebemittel zum Verschieben einer an den Tragemitteln angekoppelten Last in Längsrichtung des Trägers aufweist,
- Durchführen der Last durch die Öffnung in Längsrichtung des Trägers mithilfe der Verschiebemittel.

Die Erfindung geht auf die Erkenntnis zurück, dass die Festinstallation von Schienen und/oder eines Hebezeugs im Turminneren hohe, im Regelfall unnötige Kosten verursacht, da Lasten wie elektrische Einrichtungen wie etwa eine Transformatoreinheit nach der Inbetriebnahme der Windenergieanlage zu Reparatur- oder Wartungszwecken nur in Ausnahmefällen wieder aus dem Turminneren entfernt werden muss. Im Falle eines Defektes, der den Austausch der elektrischen Einrichtung erforderlich macht, ist es ausreichend, wenn ein Träger nur zum Zweck des Ausbaus der Einrichtung vorübergehend durch die Öffnung in das Turminnere eingeführt wird, die elektrische Einrichtung an Tragemitteln des Trägers angekoppelt und anschließend durch Verschieben entlang der Trägerachse mithilfe der Verschiebemittel aus dem Turminneren herausbewegt wird. Der sich anschließende Einbau der reparierten oder einer neuen elektrischen Einrichtung erfolgt analog.

Dieses Vorgehen bringt eine Reihe von Vorteilen mit sich: (i) Es ist keine kostenintensive dauerhafte Installation von Transportmitteln im Turminneren notwendig. Lediglich die Stützvorrichtung zum Abstützen des Trägers im Turminneren sowie die Öffnung in der Turmwand müssen zur Ausführung des Verfahrens an dem Turm vorhanden sein. Die Öffnung kann eine ohnehin vorgesehene Türöffnung oder eine größere und/oder besonders dimensionierte Öffnung sein, die zum Zweck der Durchführung der Last in der Turmwand gebildet ist. Die Öffnung kann vor und/oder nach Durchführung des Verfahrens mit einer Tür oder einem zusätzlichen Wandstück verschlossen werden. (ii) Es genügt die einmalige Ankopplung der Last an ein Transporthilfsmittel, nämlich an den von der Hebevorrichtung getragenen Träger. Es ist nicht notwendig, die Last zum Ausbau aus dem Turm zunächst auf Schienen oder mithilfe eines Hebezeuges zur Öffnung in der Turmwand zu bewegen, davon abzukoppeln, und anschließend außerhalb des Turms an einen Kran anzukoppeln, da der Träger wie eine Krantraverse eingesetzt wird und bereits zu Beginn des Verfahrens an die Hebevorrichtung angekoppelt ist. Auf diese Weise kann Zeit gespart werden. (iii) Ein einziger Träger mit daran angebrachten Trage- und Verschiebemitteln ist für eine Vielzahl von Windenergieanlagen ausreichend. Beispielsweise kann innerhalb eines größeren Windparks oder pro Reparatur- und/oder Wartungsunternehmen ein solcher Träger vorhanden sein, der dann im Falle eines erforderlichen Austauschs einer elektrischen Einrichtung an einem belieben Turm des Windparks einsetzbar ist. (iv) Das erfindungsgemäße Verfahren gewährleistet größere Sicherheit: Die Transformatoreinheit ist, insbesondere wenn sie sich im Bereich der Turmwandöffnung befindet, jederzeit über den Träger mit der Hebevorrichtung verbunden und somit gegen Herunterfallen abgesichert.

Der Träger wirkt folglich auf ähnliche Weise wie eine an einen Kranhaken gehängte Krantraverse mit in Längsrichtung der Krantraverse verschiebbar gelagerten Tragemitteln zum Anschlagen der Last.

Zur Ausführung des erfindungsgemäßen Verfahrens wird der vordere Abschnitt des Trägers mithilfe einer Hebevorrichtung wie etwa einem Kran durch die Öffnung in das Turminnere eingeführt. Der Kranhaken kann dabei an dem Träger unmittelbar oder mittelbar über ein an einem Aufhängebereich des Trägers befestigtes Anschlagmittel angreifen. Der Träger ist vorzugsweise derart an seinem hinteren Abschnitt an den Kran angehängt, dass der vordere Trägerabschnitt in die Öffnung einführbar ist, während der hintere Abschnitt außerhalb des Turms verbleibt.

Für den Einbau einer elektrischen Einrichtung in den Turm wird die elektrische Einrichtung vor Einführen des vorderen Trägerabschnittes in das Turminnere an das Tragemittel im hinteren Abschnitt des Trägers angekoppelt. Bevorzugt wird sie mithilfe eines oder mehrerer ggf. über Ketten oder Kabel an dem Träger befestigten Haken an den Träger gehängt und befindet sich dann unterhalb des Trägers etwa in Verlängerung des Lastkabels des Krans, so dass der Träger mit der angekoppelten elektrischen Einrichtung etwa im Gleichgewicht ist. Der Träger wird anschließend von dem Kran angehoben, bis sich Träger und daran angekoppelte elektrische Einrichtung auf Höhe der Turmwandöffnung befinden.

Nach Einführen des vorderen Trägerabschnittes durch die Öffnung wird der Verbindungsbereich des vorderen Trägerabschnittes mit der Stützvorrichtung im Turminneren verbunden. Anschließend wird die an dem Träger hängende elektrische Einrichtung mithilfe der Verschiebemittel etwa horizontal in Längsrichtung des Trägers durch die Öffnung geführt.

Die Verschiebemittel können beispielsweise einen Wagen mit Rollen aufweisen, die in einen Schienenabschnitt des Trägers eingreifen, wobei die Tragemittel an dem Wagen befestigt sind. Beispielsweise können eine oder mehrere Ketten mit einem oder mehreren Haken an ihren vorderen Enden als Tragemittel zum Einhängen der elektrischen Einrichtung an dem Wagen befestigt sein. An dem Wagen kann beispielsweise eine weitere Kette oder ein Kabel angeordnet sein, wobei durch Zug an diesem Kabel der Wagen in Längsrichtung des Trägers verschoben wird. Es können Organe zum Festhalten und Sichern des Wagens an mindestens einer Stelle über die Länge des Trägers vorgesehen sein. In Transportstellung befindet sich der Wagen mit daran befestigter elektrischer Einrichtung etwa in Verlängerung des Lastkabels des Krans im hinteren Trägerabschnitt, und in Ablade- oder Aufnahmestellung, wenn der Träger mit der Stützvorrichtung im Turminneren, verbunden ist, ist der Wagen mit daran angekoppelter elektrischer Einrichtung in Richtung des vorderen Trägerabschnittes verschoben.

Das erfindungsgemäße Verfahren kann flexibler eingesetzt und schneller durchgeführt werden, wenn der Träger nicht nur Verschiebemittel zum horizontalen Verschieben einer an die Tragemittel gekoppelten Last, sondern auch Hubmittel zum vertikalen Anheben und Absenken der an die Tragemittel gekoppelten Last aufweist. Insbesondere ist das Verfahren dann auch für Türme einsetzbar, bei denen sich die Turmwandöffnung nicht auf Höhe der Geschoßebene befindet, auf der die elektrische Einrichtung anzuordnen ist, sondern oberhalb dieser Geschoßebene. Beim Ausbau einer elektrischen Einrichtung aus dem Turm wird die elektrische Einrichtung nach Ankoppeln an die Tragemittel mithilfe der Hubmittel in etwa vertikaler Richtung angehoben, bis sich die elektrische Einrichtung auf Höhe der Turmwandöffnung befindet. Dann kann sie mithilfe der Verschiebemittel durch die Öffnung nach außen geführt werden. Anschließend kann die elektrische Einrichtung außerhalb des Turms mithilfe der Hubmittel auf den Boden abgelassen werden.

Alternativ kann nach Durchführung der elektrischen Einrichtung durch die Turmwandöffnung die Verbindung zwischen Verbindungsbereich und Stützvorrichtung gelöst werden, der Träger mit angekoppelter elektrischer Einrichtung mithilfe des Krans aus der Öffnung ausgeführt werden und anschließend direkt auf einem Transportmittel wie etwa der Ladefläche eines LKWs abgeladen werden. Zuletzt wird die elektrische Einrichtung von dem Tragemittel abgekoppelt.

Beim Einbau der elektrischen Einrichtung in das Turminnere kann die elektrische Einrichtung mithilfe der Verschiebemittel durch die Öffnung ins Turminnere geführt werden und in Längsrichtung des Trägers mithilfe der Verschiebemittel solange weiterbewegt werden, bis sie sich etwa oberhalb ihrer Absetzposition befindet. Anschließend kann sie mithilfe der Hubmittel vertikal nach unten abgelassen werden, ohne dass ein weiteres Verschieben der elektrischen Einrichtung im Turminneren nötig ist.

Der Verbindungsbereich befindet sich vorzugsweise am vorderen Ende des Trägers und weist eine Auflagefläche auf, die auf eine Stützfläche der Stützvorrichtung auflegbar ist. Es ist jedoch auch eine hakenförmige Stützvorrichtung denkbar, in die der Verbindungsbereich des Trägers eingehängt oder eingeklipst wird. Der Verbindungsbereich kann hierzu eine Öse oder einen Ring zum Einhängen an der Stützvorrichtung aufweisen. Ein Verbindungsbereich mit einer Auflagefläche zur Auflage auf einer Stützfläche ist jedoch besonders einfach und zuverlässig und eine Gewichtslast wird auf diese Weise besonders wirksam über die Stützvorrichtung in den Turm eingeleitet.

Nach Verbinden des Trägers mit der Stützvorrichtung wird die Gewichtskraft einer an dem Tragemittel des Trägers angekoppelten Last teilweise über die Stützvorrichtung in den Turm eingeleitet und teilweise von der Hebevorrichtung aufgenommen. Die Verschiebemittel erlauben vorzugsweise ein Verschieben der angekoppelten Last in einem Bereich unterhalb des Trägers, der zwischen dem Auflagepunkt des Trägers auf der Stützvorrichtung und dem Aufhängepunkt des Trägers an der Hebevorrichtung liegt.

Eine Stützvorrichtung ist besonders einfach herstellbar und das erfindungsgemäße Verfahren kann besonders schnell durchgeführt werden, wenn die Stützvorrichtung in Form eines mit der Turmwand verbundenen, bevorzugt an die Turmwand angeschweißten, und in das Turminnere hervorstehenden Vorsprungs gebildet ist, der aus Metall gebildet sein kann. Der Vorsprung ist vorzugsweise an der der Öffnung gegenüberliegenden Innenwand des Turm befestigt, vorzugsweise angeschweißt. Die elektrische Einrichtung befindet sich bei Betrieb der Windenergieanlage vorzugsweise zumindest teilweise vertikal unterhalb einer Verbindungsstrecke von Öffnung und Vorsprung, so dass die elektrische Einrichtung mithilfe der Hubmittel und Verschiebemittel direkt an dieser Position absetzbar ist.

Damit der Träger nicht von der Stützvorrichtung abrutschen kann, kann er mithilfe eines Sicherungselementes wie etwa einer Schraube oder einem Bolzen lösbar an der Stützvorrichtung befestigt werden. Die Befestigung mithilfe einer Schraube oder eines Bolzen ist besonders einfach und zuverlässig. Der Träger weist bevorzugt an seinem vorderen Ende zu diesem Zweck eine Ausnehmung durch Durchführung des Sicherungselementes auf.

Vorzugsweise weisen die Tragemittel Ketten oder Kabel mit Haken zur Ankopplung der elektrischen Einrichtung auf. Ein besonders stabiles Ankoppeln der elektrischen Einrichtung an dem Träger ist dann möglich, wenn die elektrische Einrichtung mindestens zwei Ankoppelpunkte zum Ankoppeln an den Tragemitteln aufweist. An jedem Ankoppelpunkt kann ein Befestigungsring oder eine Befestigungsöse vorhanden sein.

Die Hubmittel weisen vorzugsweise mindestens einen Kettenzug oder Seilzug auf, der per Handbetrieb, Elektromotor oder über Druckluft betreibbar sein kann.

Eine bevorzugte Ausführungsform des Trägers zur Ausführung des erfindungsgemäßen Verfahrens weist Verschiebemittel mit Rollen auf, die in einen parallel zur Längsachse des Trägers verlaufenden Schienenabschnitt des Trägers eingreifen. Der Träger kann beispielsweise in Form eines einfachen Doppel-T-Profils gebildet sein, wobei die Rollen in dem als Schienenabschnitt wirkenden Untergurt des Profils laufen können. Besonders bevorzugt weisen die Verschiebemittel einen Wagen auf, der über vier Rollen in dem Schieneabschnitt des Trägers läuft.

Der Träger kann besonders wirksam, ggf. über ein Anschlagmittel, an die Hebevorrichtung angekoppelt werden, wenn der Träger zwei in Längsrichtung des Trägers beabstandete Aufhängepunkte aufweist. An jedem Aufhängepunkt kann ein Befestigungsring angeordnet sein. Der Träger wird dann wie eine Krantraverse mithilfe eines Kranhakens angehoben, wobei bei Verwendung einer über zwei Aufhängepunkte mit dem Kranhaken verbundenen Traverse Schwerpunktverlagerungen besser stabilisiert werden. Der Mittelpunkt der die beiden Aufhängepunkte verbindenden Strecke muss nicht notwendigerweise in der Mitte der Trägers in dessen Längsrichtung angeordnet sein, sondern kann im hinteren Abschnitt des Trägers liegen.

Die Erfindung betrifft ferner einen Turm zur Ausführung des erfindungsgemäßen Verfahrens mit einer in der Turmwand gebildeten Öffnung zur Durchführung einer Last wie etwa einer elektrischen Einrichtung, insbesondere einer Transformatoreinheit. Der Turm weist im Turminneren eine Stützvorrichtung mit einer Stützfläche zum Auflegen einer Auflagefläche eines Trägers auf. Die Öffnung ist auf Höhe oder zumindest teilweise oberhalb der Geschoßebene gebildet, in der die elektrische Einrichtung bei Betrieb der Windenergieanlage angeordnet ist. Die Stützfläche liegt vorzugsweise zumindest teilweise in einer Horizontalebene, die die Turmwandöffnung schneidet.

Die Stützvorrichtung kann in Form eines in das Turminnere hineinragenden Vorsprungs an der der Öffnung gegenüberliegenden Turmwandinnenseite gebildet sein. Der Vorsprung ist vorzugsweise derart angeordnet, dass es eine etwa horizontal durch den Vorsprung verlaufende Gerade gibt, die die Öffnung schneidet, wobei die elektrische Einrichtung bei Betrieb der Windenergieanlage etwa vertikal unterhalb der Gerade angeordnet ist. Der kleinste Abstand dieser Gerade von der oberen Begrenzungsfläche der Öffnung ist vorzugsweise kleiner als 50 cm, besonders bevorzugt kleiner als 30 cm, insbesondere kleiner als 20 cm.

Vorzugsweise besteht der Vorsprung aus Metall und ist an die Turmwandinnenseite angeschweißt. Eine Schweißverbindung ist stabil und einfach herstellbar.

Weiter betrifft die Erfindung einen Träger mit mindestens einem Aufhängepunkt zum Hängen des Trägers an eine Hebevorrichtung wie etwa einen Kran, einem Tragemittel zum Ankoppeln einer Last an den Träger, an dem Träger angeordneten Verschiebemitteln zum Verschieben einer an die Tragemittel angekoppelten Last in Längsrichtung des Trägers und Hubmitteln zum etwa vertikalen Anheben oder Absenken einer an die Tragemittel angekoppelten Last.

Die Verschiebemittel können einen Wagen mit in einen Schienenabschnitt des Trägers eingreifenden Rollen aufweisen.

Die Hubmittel weisen bevorzugt mindestens einen Kettenzug oder Seilzug auf.

Der Träger weist bevorzugt zwei in Längsrichtung des Trägers beabstandete Aufhängepunkte wie etwa Befestigungsringe zum Hängen des Trägers an eine Hebevorrichtung auf. Eine an zwei Aufhängepunkten an einem Kran aufgehängte Traverse gleicht nämlich Gleichgewichtsschwankungen besser aus als eine an nur einem Aufhängepunkt aufgehängte Traverse.

Der Mittelpunkt der Verbindungsstrecke der beiden Aufhängepunkte ist vorzugsweise mehr als 10 cm, besonders bevorzugt mehr als 30 cm vom Mittelpunkt des Trägers in dessen Längsrichtung entfernt. Der Mittelpunkt des Trägers muss sich also nicht notwendigerweise in senkrechter Verlängerung des Lastkabels des Krans befinden, an dem der Träger aufgehängt ist. Auf diese Weise kann Material eingespart werden. Ferner ist ein kurzer Träger platzsparender und leichter und damit handlicher als ein langer Träger. Damit sich ein an den Kran gehängter Träger ohne angekoppelte Last dennoch im Wesentlichen im Gleichgewicht befindet, kann ggf. ein Gegengewicht im hinteren Trägerabschnitt angeordnet werden. Wenn sich eine an den Träger angekoppelte Last nicht in Verlängerung des Lastkabels des Krans befindet, liegt der vordere Abschnitt des Trägers auf der Stützvorrichtung auf, so dass sich keine Gleichgewichtsprobleme ergeben.

Der Träger kann ein Stahlprofil in Doppel-T-Form aufweisen. Derartige Stahlprofile sind günstig am Markt erhältlich und sind können zu einem erfindungsgemäßen Träger weitergebildet werden. Insbesondere ist das Doppef-T-Profil direkt als Schienenabschnitt zum Eingreifen von Rollen eines Verschiebemittels verwendbar.

Nachstehend wird die Erfindung unter Bezugnahme auf die Zeichnung näher erläutert. In der Zeichnung zeigt
- Fig. 1: eine schematische Skizze, die einen ersten Schritt des erfindungsgemäßen Verfahrens veranschaulicht, bei dem eine in einem Turm angeordnete elektrische Einrichtung aus dem Turm ausgebaut wird,
- Fig. 2: eine schematische Skizze, die den zweiten Schritt des erfindungsgemäßen Verfahrens aus Fig. 1 veranschaulicht,
- Fig. 3: eine schematische Skizze, die den dritten Schritt des erfindungsgemäßen Verfahrens aus Fig. 1 zeigt,
- Fig. 4: eine schematische Skizze, die den vierten Schritt des erfindungsgemäßen Verfahrens aus Fig. 1 zeigt.

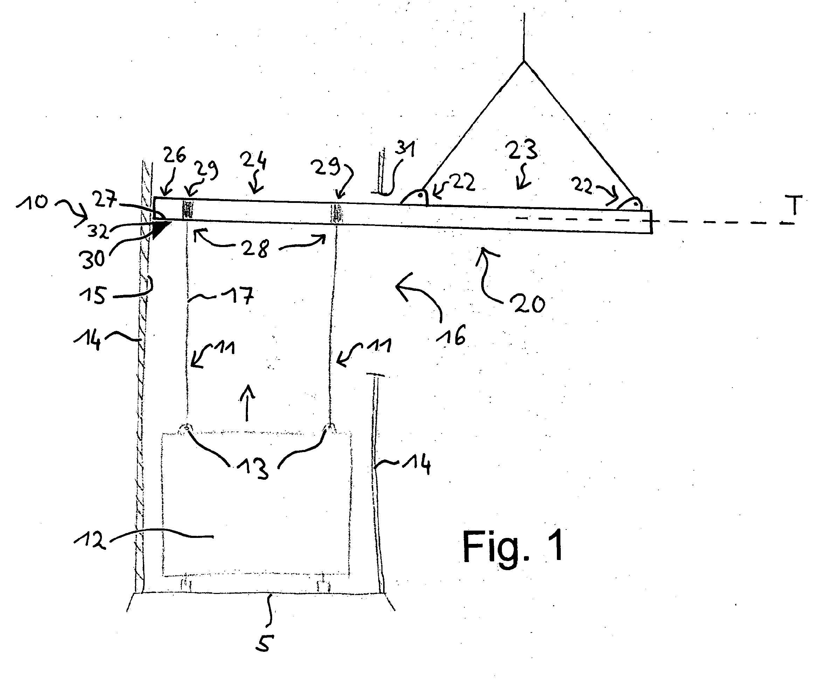

Fig. 1 zeigt einen ersten Schritt bei der Ausführung des erfindungsgemäßen Verfahrens zum Ausbau einer Transformatoreinheit (12) aus dem Turminneren eines Turmes (10) einer Windenergieanlage. Die auszubauende Transformatoreinheit (12) ist bei Betrieb der Windenergieanlage im Turminneren im Bereich des Turmfußes angeordnet. Oberhalb der Transformatoreinheit (12) ist eine Öffnung (16) in der Turmwand (14) gebildet, die derart dimensioniert ist, dass die Transformatoreinheit durch die Öffnung durchführbar ist.

An der Turmwand (14) ist auf Höhe der Öffnung an der der Öffnung gegenüberliegenden Turmwandinnenseite (15) eine Stützvorrichtung (30) befestigt. Die Stützvorrichtung ist in Form einer in das Turminnere hineinragenden Vorsprungs aus Metall gebildet, der an die Turmwand angeschweißt ist und eine Stützfläche (32) zur Auflage einer Auflagefläche (27) aufweist.

Der vordere Abschnitt (24) eines Trägers (20) mit etwa horizontal verlaufender Längsachse (T) wird mithilfe eines Krans durch die Öffnung (16) in das Turminnere eingeführt. An seinem hinteren Abschnitt (23) weist der Träger (20) zwei Aufhängepunkte (22) auf, über die er an dem Kran (nicht gezeigt) aufgehängt ist. Die Aufhängepunkte (22) sind in Längsrichtung des Trägers beanstandet und weisen jeweils einen Befestigungsring auf.

An seinem vorderen Abschnitt (24) weist der Träger (20) einen Verbindungsbereich (26) mit einer Auflagefläche (27) auf. Die Auflagefläche (27) wird auf der Stützfläche (32) der Stützvorrichtung (30) aufgelegt. Zusätzlich wird der Träger in dem Verbindungsbereich derart an der Stützvorrichtung (30) und/oder der Turmwand (14) befestigt, dass der Träger in dieser Lage gesichert ist und insbesondere ein Abrutschen des Trägers von der Stützvorrichtung verhindert wird. Dies kann beispielsweise mit einem Bolzen oder einer Schraube geschehen.

Die Stützvorrichtung (30) ist derart im Turminneren angeordnet, dass der kleinste Abstand zwischen Träger (20) und oberer Begrenzungsfläche (31) der Öffnung kleiner als 20 cm ist, wenn der Träger etwa horizontal angeordnet ist. So durchsetzt der Träger die Öffnung in deren oberen Bereich und nahezu die gesamte Fläche der Öffnung kann zur Durchführung der Transformatoreinheit (12) genutzt werden. Die Öffnung sollte vorzugsweise so klein wie möglich sein, soweit die Transformatoreinheit noch durch die Öffnung durchführbar ist, da eine große Öffnung in der Turmwand (14) die Turmstabilität beeinträchtigen kann. Die Fläche der Öffnung wird dann bestmöglich ausgenutzt, wenn der Träger (20) die Öffnung so weit oben wie möglich durchsetzt und die Transformatoreinheit (12) so nahe am Träger wie möglich durch die Öffnung geführt wird.

An dem Träger (20) sind Tragemittel (11) zum Ankoppeln der Transformatoreinheit (12) angeordnet, die mehrere Ketten (17) mit Haken zum Einhängen an Ankoppelpunkten (13) der Transformatoreinheit aufweisen. Über an dem Träger angeordnete Hubmittel (28) in Form eines oder mehrerer Kettenzüge kann die an den Tragemitteln (11) angekoppelte Transformatoreinheit vertikal in Richtung des Trägers (20) angehoben werden, bis sie knapp unterhalb des Trägers (20) auf Höhe der Öffnung (16) vom Träger hängt.

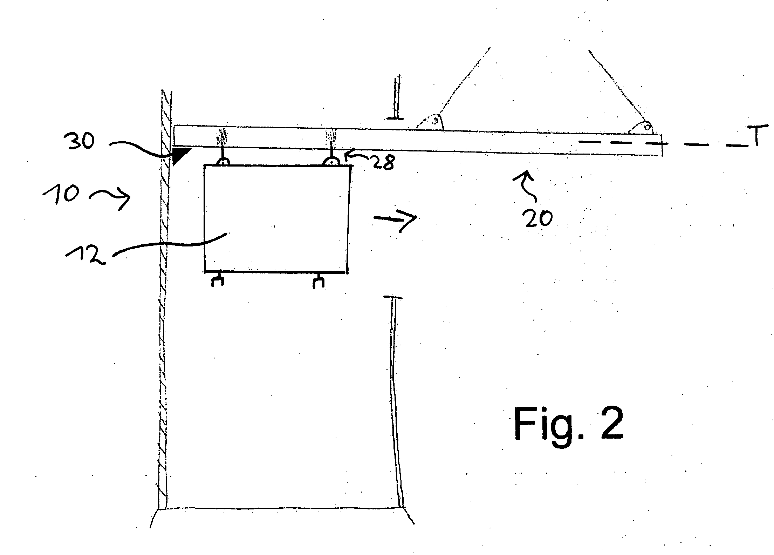

In Fig. 2 ist die Transformatoreinheit (12) nach Anheben mithilfe der Hubmittel (28) gezeigt. Ein Großteil der Gewichtslast der Transformatoreinheit wird zu diesem Zeitpunkt über die Stützvorrichtung (30) in den Turm (10) eingeleitet. Bei Verschieben der Transformatoreinheit in Richtung der Trägerachse (T) durch die Öffnung (16) nimmt die von dem Kran getragene Gewichtslast zu und die auf die Stützvorrichtung (30) wirkende Gewichtslast ab.

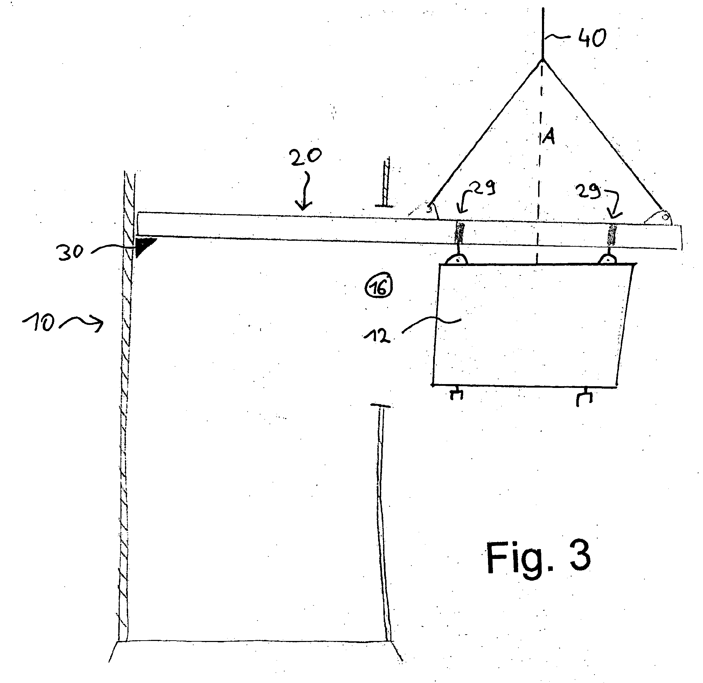

In einem nächsten Schritt wird die Transformatoreinheit in Richtung der Längsachse (T) des Trägers (20) mithilfe von an dem Träger angeordneten Verschiebemitteln (29) durch die Öffnung (16) aus dem Türminneren herausgeführt (Figur 3). Die Verschiebemittel (29) können einen Wagen mit Rollen aufweisen, die in einem Schienenabschnitt des Trägers laufen. Die Durchführung der Transformatoreinheit durch die Öffnung kann durch manuelle Druck- oder Zugeinwirkung auf die von dem Träger hängende Transformatoreinheit. (12) geschehen. Es ist jedoch auch denkbar, dass die Verschiebemittel (29) ein an dem Wagen befestigtes Kabel oder eine Kette aufweisen, die durch eine Winde bewegbar ist, so dass die Transformatoreinheit (12) durch Kurbeln an der Winde verschoben wird. Ferner ist denkbar, dass die Transformatoreinheit durch geringfügiges Absenken des Trägers in vertikaler Richtung mithilfe des Krans bei gleichzeitiger Auflage des vorderen Trägerabschnittes auf der Stützvorrichtung (30) und infolge einer damit verbundenen Schrägstellung des Trägers (20) unter Schwerkraftwirkung durch die Öffnung aus dem Turminneren "herausrollt". Es kann beispielsweise auch ein Motor vorgesehen sein, der den Wagen längs einer Zahnstange bewegt, die entlang des Trägers angebracht ist, wobei der Motor im Wagen untergebracht sein kann. Der Motor kann auch an einem Ende des Trägers angeordnet sein und den Wagen über eine Kette antreiben.

Der Wagen kann an beliebigen Positionen über die Länge der Schiene derart gesichert werden, dass ein Verschieben des Wagens von dieser Position verhindert ist. Dies kann beispielsweise mithilfe einer Klemmvorrichtung geschehen, die an dem Wagen angebracht ist und in reibschlüssige Verbindung mit dem Schienenabschnitt des Trägers gebracht werden kann.

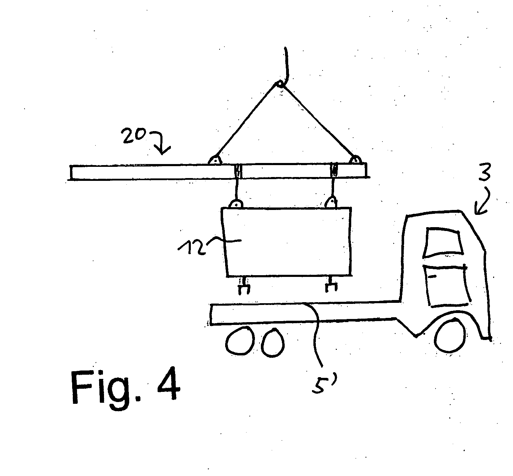

Die Transformatoreinheit (12) wird entlang des Trägers (20) verschoben, bis sie sich etwa in Verlängerung (A) des Lastkabels (40) des Krans unterhalb des Trägers befindet. An dieser Position kann sie beispielsweise mithilfe einer Klemmvorrichtung gesichert werden. Die Verbindung von Träger (20) und Stützvorrichtung (30) wird anschließend gelöst und der Träger mit daran angekoppelter Transformatoreinheit wird vollständig aus dem Turminneren herausgeführt. Anschließend kann der Träger mit angekoppelter Transformatoreinheit auf der Ladefläche (5') eines Transportmittels (3) wie etwa eines LKWs abgeladen werden (siehe Fig 4).

Bei einem Einbau einer Transformatoreinheit in das Turminnere werden die beschriebenen Verfahrensschritte im Wesentlichen unverändert in umgekehrter Reihenfolge durchlaufen. Die Transportrichtungen und Befestigungsvorgänge müssen für den Einbau entsprechend angepasst werden, was für den Fachmann offensichtlich ist. Vorzugsweise ist die Stützvorrichtung derart an der Turmwand angeordnet, dass nach Ablassen der Transformatoreinheit auf eine Auflagefläche (5) im Turminneren mithilfe der Hubmittel kein weiteres Verschieben oder Umpositionieren der Transformatoreinheit im Turminneren mehr erforderlich ist. Die Auflagefläche der Transformatoreinheit befindet sich folglich zumindest teilweise vertikal unterhalb einer Verbindungsgeraden von Öffnung (16) und Stützvorrichtung (30).

Das erfindungsgemäße Verfahren ist nicht notwendigerweise auf die beschriebene Ausführungsmöglichkeit beschränkt. Vielmehr ist es für den Fachmann offensichtlich, dass beispielsweise die Turmwandöffnung eine Türöffnung sein kann, deren untere Begrenzung mit der Bodenfläche der Geschoßebene fluchtet, auf der die Transformatoreinheit bei Betrieb der Windenergieanlage abgestellt ist. Auch kann die Stützvorrichtung beispielsweise in Form eines im Turminneren von oben herabhängenden Gurtes mit Haken gebildet sein, an dem der Träger eingehängt werden kann. Der Vorteil einer solchen Stützvorrichtung liegt darin, dass ein Gurt problemlos verlängerbar oder verkürzbar ist. Ferner kann auch ein Träger mit symmetrisch angeordneten Aufhängepunkten zum Aufhängen an dem Kran verwendet werden, so dass die Verlängerung (A) des Krankabels (40) den Träger mittig schneidet.

## Patentansprüche

1. Verfahren zum Durchführen einer Last wie etwa einer elektrischen Einrichtung (12) durch eine in einer Turmwand eines Turms (10) einer Windenergieanlage gebildete Öffnung (16), **gekennzeichnet durch** die folgenden Schritte:
- Einführen eines vorderen Abschnittes (24) eines Trägers (20) mit etwa horizontal verlaufender Längsachse (T) **durch** die Öffnung (16) in das Turminnere, wobei der Träger an einer Hebevorrichtung wie etwa einem Kran aufgehängt ist,
- Verbinden eines Verbindungsbereichs (26) des vorderen Trägerabschnittes (24) mit einer im Turminneren vorgesehenen Stützvorrichtung (30),
- Ankoppeln der Last an an dem Träger angeordnete Tragemittel (11), wobei der Träger Verschiebemittel (29) aufweist zum Verschieben einer an den Tragemitteln angekoppelten Last in Längsrichtung des Trägers (T),
- Durchführen der elektrischen Einrichtung (12) **durch** die Öffnung (16) in Längsrichtung des Trägers (T) mithilfe der Verschiebemittel (29).

2. Verfahren nach Anspruch 1, **gekennzeichnet durch** den zusätzlichen Verfahrensschritt des vertikalen Anhebens der an die Tragemittel (11) angekoppelten Last (12) vor Durchführen der Last **durch** die Öffnung (16) mithilfe von an dem Träger (20) angeordneten Hubmitteln (28) wie etwa einem Kettenzug zum Anheben und Absenken der an die Tragemittel gekoppelten Last, bis sich die Last auf Höhe der Öffnung (16) befindet.

3. Verfahren nach Anspruch 1 oder 2, **gekennzeichnet durch** den zusätzlichen Verfahrensschritt des Absenkens der an die Tragemittel (11) angekoppelten Last nach Durchführung der Last **durch** die Öffnung (16) mithilfe von an dem Träger angeordneten Hubmitteln (28) wie etwa einem Kettenzug zum Anheben und Absenken der an die Tragemittel gekoppelten Last, bis die Last auf einer Ablagefläche (5, 5') aufliegt.

4. Verfahren nach einem der vorangehenden Ansprüche, **dadurch gekennzeichnet, dass** der Verbindungsbereich (26) eine an dem vorderen Ende des Trägers (20) angeordnete Auflagefläche (27) aufweist, die auf eine Stützfläche (32) der Stützvorrichtung (30) aufgelegt wird.

5. Verfahren nach Anspruch 4, **dadurch gekennzeichnet, dass** die Stützvorrichtung (30) in Form eines mit der Turmwand (14) verbundenen, bevorzugt an die Turmwand angeschweißten, und in das Turminnere hervorstehenden Vorsprungs gebildet ist.

6. Verfahren nach Anspruch 4 oder 5, **dadurch gekennzeichnet, dass** der Träger (20) an der Stützvorrichtung (30) mithilfe eines Sicherungselementes wie etwa einer Schraube oder einem Bolzen lösbar befestigt wird.

7. Verfahren nach einem der vorangehenden Ansprüche, **dadurch gekennzeichnet, dass** die Tragemittel (11) Ketten (17) und/oder Kabel mit Haken aufweisen, die an mindestens zwei Ankoppelpunkten (13) der Last (12) befestigt werden.

8. Verfahren nach einem der vorangehenden Ansprüche, **dadurch gekennzeichnet, dass** die Verschiebemittel (29) Rollen aufweisen, die in einen parallel zur Längsachse (T) des Trägers (20) verlaufenden Schienenabschnitt des Trägers eingreifen.

9. Verfahren nach einem der vorangehenden Ansprüche, **dadurch gekennzeichnet, dass** der Träger an zwei in Längsrichtung des Trägers beabstandeten Aufhängepunkten (22) wie etwa Befestigungsringen unmittelbar oder mittelbar über ein Anschlagmittel an der Hebevorrichtung aufgehängt wird.

10. Turm (10) einer Windenergieanlage zur Ausführung des Verfahrens nach einem der Ansprüche 1 bis 9 mit einer in der Turmwand (14) gebildeten Öffnung (16) zum Durchführen einer Last wie etwa einer elektrischen Einrichtung (12), **gekennzeichnet durch** eine eine Stützfläche (32) zum Stützen einer Auflagefläche eines Trägers aufweisende Stützvorrichtung (30) im Turminneren auf Höhe der Öffnung (16).

11. Turm nach Anspruch 10, **dadurch gekennzeichnet, dass** die Stützvorrichtung in Form eines in das Turminnere hineinragenden Vorsprungs an der der Öffnung (16) gegenüberliegenden Turmwandinnenseite (15) gebildet ist.

12. Turm nach Anspruch 11, **dadurch gekennzeichnet, dass** der Vorsprung aus Metall besteht und an die Turmwandinnenseite (15) angeschweißt ist.

13. Turm nach einem der Ansprüche 10 bis 12, **dadurch gekennzeichnet, dass** es eine horizontal verlaufende, die Stützvorrichtung (30) und die Öffnung (16) schneidende Gerade gibt, deren geringster Abstand von einer oberen Begrenzung (31) der Öffnung weniger als 30 cm, bevorzugt weniger als 20 cm ist.

14. Träger zum Ausführen des Verfahrens nach einem der Ansprüche 1 bis 9 mit mindestens einem Aufhängepunkt (22) zum Hängen des Trägers an eine Hebevorrichtung wie etwa einen Kran, einem Tragemittel (11) zum Ankoppeln einer Last an den Träger, an dem Träger angeordneten Verschiebemitteln (29) zum Verschieben einer an die Tragmittel angekoppelten Last in Längsrichtung des Trägers und Hubmitteln (28) zum etwa vertikalen Anheben oder Absenken einer an die Tragemittel angekoppelten Last.

15. Träger nach Anspruch 14, **dadurch gekennzeichnet, dass** die Verschiebemittel einen Wagen mit in einen Schienenabschnitt des Trägers eingreifenden Rollen aufweisen.

16. Träger nach Anspruch 14 oder 15, **dadurch gekennzeichnet, dass** die Hubmittel mindestens einen Kettenzug oder Seilzug aufweisen.

17. Träger nach einem der Ansprüche 14 bis 16, **dadurch gekennzeichnet, dass** der Träger zwei in Längsrichtung des Trägers beabstandete Aufhängepunkte (22) zum Hängen des Trägers an eine Hebevorrichtung aufweist.

18. Träger nach Anspruch 17, **dadurch gekennzeichnet, dass** der Mittelpunkt der Verbindungsstrecke der beiden Aufhängepunkte mehr als 10 cm, bevorzugt mehr als 30 cm vom Mittelpunkt des Trägers in dessen Längsrichtung entfernt ist.

19. Träger nach einem der Ansprüche 14 bis 18, **dadurch gekennzeichnet, dass** der Träger ein Stahlprofil in Doppel-T-Form aufweist.
